# EUROPEAN PATENT APPLICATION

(11) **EP 3 923 111 A1**
(43) Date of publication of application: **15.12.2021**
(21) Application number: 20922475.7
(22) Date of filing: 03.04.2020
(51) Int. Cl.: G05F 1/575

(54) **LOW-DROPOUT LINEAR VOLTAGE STABILIZING CIRCUIT**

(71) Applicant: SHENZHEN GOODIX TECHNOLOGY CO., LTD., Shenzhen, Guangdong 518045 (CN)
(72) Inventor:
(74) Representative: Feira, Edoardo
(86) International application number: PCT/CN2020/083370
(87) International publication number: WO 2021/196233

(57) **Abstract**

Embodiments of the present disclosure provides a low dropout regulator circuit, including: an error amplifying circuit, a charge pump circuit, and an output feedback circuit; where an output terminal of the error amplifying circuit is connected to an input terminal of the charge pump circuit; the charge pump circuit includes a first switch module, a first energy storage module, a third switch module, a parasitic capacitor, a second switch module, a second energy storage module, and a clock control circuit; the clock control circuit is connected to the first switch module to control whether the first switch module is closed, is connected to the third switch module to control whether the third switch module is closed, and is connected to the second switch module to control whether the second switch module is closed; and an output terminal of the charge pump circuit is connected to the output feedback circuit, and the output feedback circuit is connected to the error amplifying circuit, thereby providing a higher voltage, and reducing voltage fluctuations.

## Description

### TECHNICAL FIELD

Embodiments of the present disclosure relate to the field of electronic technologies, and specifically to a low dropout regulator circuit.

### BACKGROUND

For a low dropout regulator (LDO), in order to achieve faster responses, an N-type metal oxide semiconductor field effect transistor (MOS) is usually used as an output power resistor, since the N-type MOS has a greater mobility which allows the N-type MOS to provide a larger current in the same area, and source degeneration makes the N-type MOS have stronger transient responses. However, the N-type MOS needs to consume more voltage margin, and can hardly apply under a low power supply voltage.

### SUMMARY OF THE INVENTION

In view of this, one of the technical problems to be solved by embodiments of the present disclosure is to provide a low dropout regulator circuit, to overcome the defect that a MOS in the low dropout regulator circuit of the prior art hardly applies.

An embodiment of the present disclosure provides a low dropout regulator circuit, including: an error amplifying circuit, a charge pump circuit, and an output feedback circuit; where

an output terminal of the error amplifying circuit is connected to an input terminal of the charge pump circuit;

the charge pump circuit includes a first switch module, a first energy storage module, a third switch module, a parasitic capacitor, a second switch module, a second energy storage module, and a clock control circuit, where the parasitic capacitor is formed between an element in the first energy storage module and a ground point;

the first switch module is connected to the first energy storage module to form a first charging branch; the third switch module is connected to one terminal of the first energy storage module, the third switch module and the parasitic capacitor form a third charging branch; and the first energy storage module is connected to the second switch module and the second energy storage module to form a second charging branch;

the clock control circuit is connected to the first switch module to control whether the first switch module is closed, is connected to the third switch module to control whether the third switch module is closed, and is connected to the second switch module to control whether the second switch module is closed; and

an output terminal of the charge pump circuit is connected to the output feedback circuit, and the output feedback circuit is connected to the error amplifying circuit.

Alternatively, in an embodiment of the present disclosure, the error amplifying circuit includes an amplifier and a voltage replication module, and the voltage replication module outputs the same output voltage as the amplifier;

an inverting input terminal of the amplifier is connected to the output feedback circuit, a reference voltage is inputted to a non-inverting input terminal of the amplifier, and an output terminal of the amplifier is connected to the second charging branch; and

an output terminal of the voltage replication module is connected to the third charging branch.

Alternatively, in an embodiment of the present disclosure, the first switch module includes a first switch unit and a second switch unit; one terminal of the first switch unit is grounded, and the other terminal of the first switch unit is connected to a first terminal of the first energy storage module; and

one terminal of the second switch unit is connected to a second terminal of the first energy storage module, and the other terminal of the second switch unit is connected to a regulated voltage.

Alternatively, in an embodiment of the present disclosure, the first switch unit is a first field effect transistor, and the second switch unit is a second field effect transistor.

Alternatively, in an embodiment of the present disclosure, the second switch module includes a third switch unit and a fourth switch unit;

one terminal of the third switch unit is connected to the output terminal of the amplifier and a first terminal of the second energy storage module, and the other terminal of the third switch unit is connected to a first terminal of the first energy storage module; and

one terminal of the fourth switch unit is connected to a second terminal of the second energy storage module, and the other terminal of the fourth switch unit is connected to a second terminal of the first energy storage module.

Alternatively, in an embodiment of the present disclosure, the third switch unit is a third field effect transistor, and the fourth switch unit is a fourth field effect transistor.

Alternatively, in an embodiment of the present disclosure, the charge pump circuit further includes a voltage boost circuit, and the voltage boost circuit is connected between the clock control circuit and a grid electrode of the fourth field effect transistor.

Alternatively, in an embodiment of the present disclosure, the third switch module is connected between the output terminal of the voltage replication module and a first terminal of the parasitic capacitor, a second terminal of the parasitic capacitor is grounded, and the first terminal of the parasitic capacitor is connected to a first terminal of the first energy storage module.

Alternatively, in an embodiment of the present disclosure, the third switch module is a fifth field effect transistor.

Alternatively, in an embodiment of the present disclosure, the first energy storage module is a first capacitor, the second energy storage module is a second capacitor, and the parasitic capacitor is a third capacitor, where the third capacitor is formed between a polar plate of the first capacitor and a ground point.

Alternatively, in an embodiment of the present disclosure, the output feedback circuit includes a sixth field effect transistor, a first resistor, a second resistor, and a fourth capacitor;

the output terminal of the charge pump circuit is connected to a grid electrode of the sixth field effect transistor, a drain electrode of the sixth field effect transistor is connected with an input voltage, and a source electrode of the sixth field effect transistor outputs an output voltage from the low dropout regulator circuit;

a first terminal of the first resistor is connected to the source electrode of the sixth field effect transistor, a second terminal of the first resistor is connected to the second resistor, and the second terminal of the first resistor is connected to the inverting input terminal of the amplifier; and

a second terminal of the second resistor is grounded, a first terminal of the fourth capacitor is connected to the source electrode of the sixth field effect transistor, and a second terminal of the fourth capacitor is grounded.

In the low dropout regulator circuit of embodiments of the present disclosure, a charge pump circuit provides a higher voltage, i.e., an input voltage of an output feedback circuit is boosted, such that a grid electrode of an N-type MOS can input a higher voltage even in a low-voltage environment, and the N-type MOS applies to a low-voltage environment; a clock control circuit included in the charge pump circuit can control disconnection or closure of a first switch module, a third switch module, and a second switch module respectively, charge a first energy storage module when a switch unit in the first switch module is closed, and charge a parasitic capacitor when a switch in the third switch module is closed; the first energy storage module charges a second energy storage module when a switch unit in the second switch module is closed, to ensure voltage stability; and before the second switch module is closed, the third switch module can be closed to separately charge the parasitic capacitor, thereby avoiding great voltage fluctuations caused by charging of the parasitic capacitor when the second switch module is closed.

### BRIEF DESCRIPTION OF THE DRAWINGS

Some specific embodiments of embodiments of the present disclosure will be described in detail below with reference to the accompanying drawings in an exemplary manner, instead of in a limiting manner. Identical reference numerals in the accompanying drawings represent identical or similar components or parts. Those skilled in the art should understand that these figures may not be drawn to scale. In the figures:
FIG. 1 is a block diagram of a low dropout regulator circuit provided in an embodiment of the present disclosure;
FIG. 2 is a schematic structural diagram of the low dropout regulator circuit provided in an embodiment of the present disclosure;
FIG. 3 is a schematic diagram of sequential control provided in an embodiment of the present disclosure;
FIG. 4 is a global schematic diagram of a block diagram of a circuit structure of an output feedback circuit, and an error amplifying circuit and a charge pump circuit in the low dropout regulator circuit provided in an embodiment of the present disclosure;
FIG. 5 is a schematic structural diagram of the error amplifying circuit provided in an embodiment of the present disclosure;
FIG. 6 is a structural diagram of a voltage boost circuit provided in an embodiment of the present disclosure; and
FIG. 7 is a schematic diagram of a signal effect of the voltage boost circuit provided in an embodiment of the present disclosure.

### DETAILED DESCRIPTION

Any technical solution in embodiments of the present disclosure may not necessarily be implemented to achieve all of the above advantages.

To enable those skilled in the art to better understand the technical solutions in the embodiments of the present disclosure, the technical solutions in the embodiments of the present disclosure will be clearly and completely described below with reference to the accompanying drawings in the embodiments of the present disclosure. Apparently, the described embodiments are merely a part, instead of all, of the embodiments of the present disclosure. All other embodiments obtained by those of ordinary skills in the art based on the embodiments of the present disclosure should fall within the scope of protection of the embodiments of the present disclosure.

Specific implementations of the embodiments of the present disclosure will be further described below with reference to the accompanying drawings of the embodiments of the present disclosure.

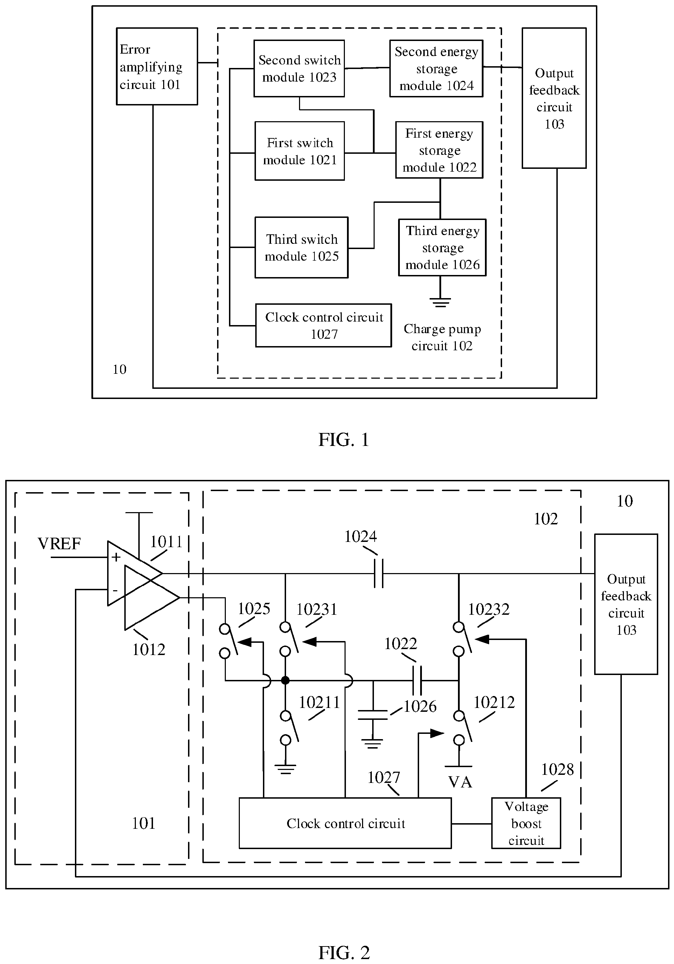

FIG. 1 is a schematic block diagram of a low dropout regulator circuit provided in an embodiment of the present disclosure. This embodiment of the present disclosure provides a low dropout regulator circuit 10. As shown in FIG. 1, the low dropout regulator circuit 10 includes: an error amplifying circuit 101, a charge pump circuit 102, and an output feedback circuit 103; where

an output terminal of the error amplifying circuit 101 is connected to an input terminal of the charge pump circuit 102;

the charge pump circuit 102 includes a first switch module 1021, a first energy storage module 1022, a third switch module 1025, a parasitic capacitor 1026, a second switch module 1023, a second energy storage module 1024, and a clock control circuit 1027, where the parasitic capacitor 1026 is formed between an element in the first energy storage module 1022 and a ground point;

the first switch module 1021 is connected to the first energy storage module 1022 to form a first charging branch; the third switch module 1025 is connected to one terminal of the first energy storage module 1022, the third switch module 1025 and the parasitic capacitor 1026 form a third charging branch; and the first energy storage module 1022 is connected to the second switch module 1023 and the second energy storage module 1024 to form a second charging branch;

the clock control circuit 1027 is connected to the first switch module 1021 to control whether the first switch module 1021 is closed, is connected to the third switch module 1025 to control whether the third switch module 1025 is closed, and is connected to the second switch module 1023 to control whether the second switch module 1023 is closed; and

an output terminal of the charge pump circuit 102 is connected to the output feedback circuit 103, and the output feedback circuit 103 is connected to the error amplifying circuit 101. The output feedback circuit 103 is used to stabilize an output voltage from the error amplifying circuit 101. Because the charge pump circuit 102 boosts an input voltage, i.e., the voltage inputted to the output feedback circuit 103 is boosted, the output feedback circuit 103 provides a higher input voltage in a low-voltage environment, such that a grid electrode of an N-type MOS may reach a higher voltage in a low-voltage environment, and the N-type MOS applies to a low-voltage environment. Alternatively, in the present disclosure, the output feedback circuit 103 includes an N-type MOS.

As shown in FIG. 1, alternatively, a reference voltage and an output voltage from the output feedback circuit 103 are inputted to two input terminals of the error amplifying circuit 101 respectively. An error voltage is generated based on an error value between the reference voltage and the output voltage from the output feedback circuit 103, is amplified, and is outputted from the output terminal of the error amplifying circuit 101. The voltage outputted from the error amplifying circuit 101 is inputted to the charge pump circuit. Alternatively, the voltage outputted from the error amplifying circuit 101 is inputted to the second charging branch and the third charging branch of the charge pump circuit 102.

It should be noted that each of the first switch module 1021, the third switch module 1025, and the second switch module 1023 includes at least one switch unit, and the disconnection or connection of the switch module can make the corresponding charging branch be disconnected or connected. Specifically, when the first switch module 1021 is closed, the first charging branch is connected. In this case, the first energy storage module 1022 is charged by defining an external bias voltage connected to the energy storage module 1022. When the third switch module 1025 is closed, the third charging branch is connected to charge the parasitic capacitor 1026 through the error amplifying circuit 101. When the first switch module 1021 and the third switch module 1025 are disconnected, and the second switch module 1023 is switched on, the second charging branch is connected, and the first energy storage module 1022 is discharged to charge the second energy storage module 1024. When the first energy storage module 1022 is charging the second energy storage module 1024, the error amplifying circuit 101 is also charging the second energy storage module 1024. Therefore, a voltage across the second energy storage module is boosted, and a voltage inputted to the output feedback circuit 103 is relatively high. One terminal of the second energy storage module 1024 close to the output feedback circuit serves as the output terminal of the charge pump circuit 102, and can provide a higher voltage to the output feedback circuit 103. The first switch module 1021 and the second switch module 1023 are not disconnected or closed simultaneously, i.e., states of the two switch modules are complementary.

The voltage inputted to the output feedback circuit 103 becomes higher, such that the N-type MOS can apply to this circuit. The output feedback circuit 103 processes a voltage signal outputted from the charge pump circuit, and sends feedback to an input terminal of the error amplifying circuit 101, to stabilize the output voltage from the error amplifying circuit 101.

The charge pump circuit 102 in this embodiment can provide a higher voltage. Referring to the circuit as shown in FIG. 1, because the first energy storage module 1022 may pre-store charges by charging, when the error amplifying circuit is transferring charges to the second energy storage module 1024, the pre-stored charges of the first energy storage module 1022 are also transferred to the second energy storage module 1024, such that the voltage from the second energy storage module 1024 is boosted, and a relatively high voltage is inputted to the output feedback circuit 103. In this process, the parasitic capacitor 1026 is formed between the element in the first energy storage module 1022 and the ground point, i.e., the element in the first energy storage module 1022 forms the parasitic capacitor 1026 with respect to the ground. Therefore, when charging the second energy storage module 1024, the first energy storage module 1022 will first charge the parasitic capacitor 1026, which will cause a large output ripple from the circuit. In the present disclosure, before the first energy storage module 1022 charges the second energy storage module 1024, the third switch module 1025 is controlled to be closed, the parasitic capacitor 1026 is first charged through the error amplifying circuit 101, and then when the first energy storage module 1022 is charging the second energy storage module 1024, charging of the parasitic capacitor 1026 has already been completed, thereby preventing the occurrence of circuit output ripple, and avoiding the instability of output voltage.

Based on the block diagram of the low dropout regulator circuit as shown in FIG. 1, FIG. 2 is a schematic structural diagram of the low dropout regulator circuit provided in an embodiment of the present disclosure, and the low dropout regulator circuit as shown in FIG. 2 is further limited description of the low dropout regulator circuit as shown in FIG. 1. FIG. 2 focuses on showing an internal structure of the charge pump circuit 102, and further shows a structure of the error amplifying circuit 101 in detail. Referring to FIG. 2, alternatively, in an embodiment of the present disclosure, the error amplifying circuit 101 includes an amplifier 1011 and a voltage replication module 1012, and the voltage replication module 1012 outputs the same output voltage as the amplifier 1011.

An inverting input terminal of the amplifier 1011 is connected to the output feedback circuit 103, a reference voltage is inputted to a non-inverting input terminal of the amplifier 1011, and an output terminal of the amplifier 1011 is connected to the second charging branch; and an output terminal of the voltage replication module 1012 is connected to the third charging branch.

A voltage outputted from the output terminal of the voltage replication module 1012 is the same as a voltage outputted from the output terminal of the amplifier 1011.

Referring to FIG. 2, in the present disclosure, the switch module may include at least one switch unit. A switch unit may be a field effect transistor or a triode, and the energy storage module may be a capacitor. Of course, this is only example description. Here, three examples are listed to illustrate the first charging branch, the third charging branch, and the second charging branch respectively.

Alternatively, in a first example, the first switch module 1021 includes a first switch unit 10211 and a second switch unit 10212; one terminal of the first switch unit 10211 is grounded, and the other terminal of the first switch unit is connected to a first terminal of the first energy storage module 1022; and

one terminal of the second switch unit 10212 is connected to a second terminal of the first energy storage module 1022, and the other terminal of the second switch unit 10212 is connected to a bias voltage (VA). The bias voltage is an external voltage, and may be connected through an external circuit.

Alternatively, in an embodiment of the present disclosure, the first switch unit 10211 is a first field effect transistor, and the second switch unit 10212 is a second field effect transistor. The first energy storage module 1022 may be a first capacitor.

Alternatively, in a second example, the second switch module 1023 includes a third switch unit 10231 and a fourth switch unit 10232;

one terminal of the third switch unit 10231 is connected to the output terminal of the amplifier 1011 and a first terminal of the second energy storage module 1024, and the other terminal of the third switch unit 10231 is connected to a first terminal of the first energy storage module 1022; and

one terminal of the fourth switch unit 10232 is connected to a second terminal of the second energy storage module 1024, and the other terminal of the fourth switch unit 10232 is connected to a second terminal of the first energy storage module 1022.

Alternatively, in an embodiment of the present disclosure, the third switch unit 10231 is a third field effect transistor, and the fourth switch unit 10232 is a fourth field effect transistor. The second energy storage module 1024 may be a second capacitor.

Alternatively, in an embodiment of the present disclosure, the charge pump circuit 102 further includes a voltage boost circuit 1028, and the voltage boost circuit 1028 is connected between the clock control circuit 1027 and a grid electrode of the fourth field effect transistor.

Alternatively, in a third example, the third switch module 1025 is connected between the output terminal of the voltage replication module 1012 and a first terminal of the parasitic capacitor 1026, a second terminal of the parasitic capacitor 1026 is grounded, and the first terminal of the parasitic capacitor 1026 is connected to a first terminal of the first energy storage module 1022.

Alternatively, in an embodiment of the present disclosure, the third switch module 1025 may be a fifth switch unit, and the fifth switch unit may be a fifth field effect transistor. The parasitic capacitor 1026 is a capacitor formed between a polar plate of the first capacitor and a ground point.

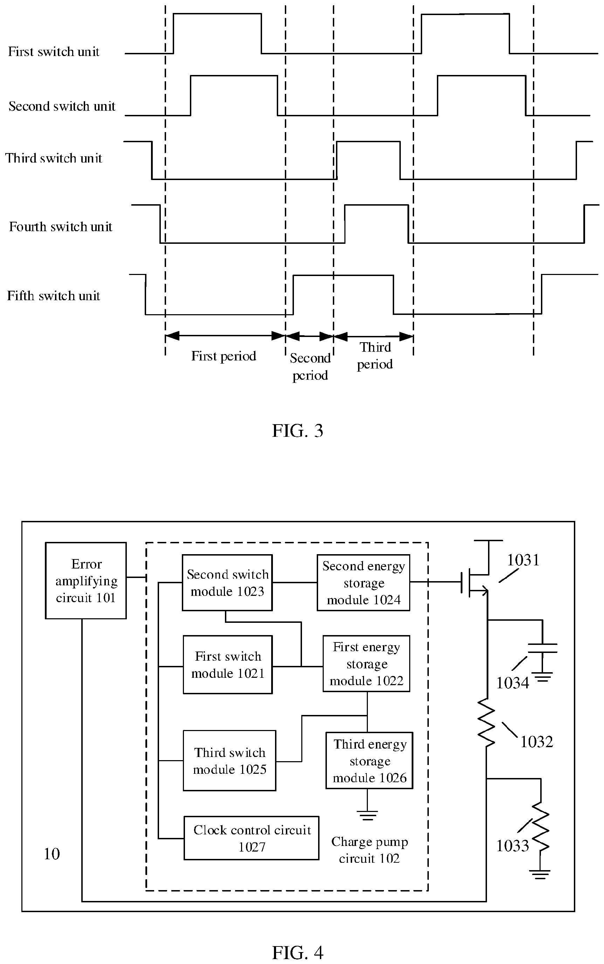

Based on the above circuit as shown in FIG. 2, FIG. 3 is a schematic diagram of sequential control provided in an embodiment of the present disclosure. FIG. 3 shows the control of the first switch unit 10211, the second switch unit 10212, the third switch unit 10231, the fourth switch unit 10232, and the fifth switch unit. A high level means that the switch is closed, and the branch is connected, while a low level means that the switch is switched off and the branch is disconnected. As shown in FIG. 3, one cycle of control may be divided into three periods. In a first period, the first switch unit 10211 and the second switch unit 10212 are closed, the third switch unit 10231, the fourth switch unit 10232, and the fifth switch unit are switched off, and the first energy storage module 1022 is charged to a regulated voltage. In a second period, the first switch unit 10211 and the second switch unit 10212 are disconnected, and the fifth switch unit is closed. In this case, an output voltage from the voltage replication module 1012 charges the parasitic capacitor 1026. In a third period, the third switch unit 10231 and the fourth switch unit 10232 are closed, and the first switch unit 10211 and the second switch unit 10212 are disconnected, because in the second period, the parasitic capacitor 1026 has been charged, and after the third switch unit 10231 and the fourth switch unit 10232 are closed, it is not necessary to charge the parasitic capacitor 1026 through an output voltage from the output terminal of the amplifier 1011. The first energy storage module 1022 charges the second energy storage module 1024.

It should be noted that, in a cycle, a bias voltage of the first switch unit 10211 may change from a high level to a low level prior to a bias voltage of the second switch unit 10212, i.e., the first switch unit 10211 is disconnected prior to the second switch unit 10212. First, referring to FIG. 2, when the first switch unit 10211 and the second switch unit 10212 are closed, the first energy storage module 1022 is charged through the bias voltage (VA). If the second switch unit 10212 is first disconnected, or the first switch unit 10211 and the second switch unit 10212 are disconnected simultaneously, the second switch unit 10212 will also transfer a part of charges to the first energy storage module 1022, i.e., a channel injection effect will be generated, thereby producing an error between the charges stored on the first energy storage module 1022 and an expected amount of charges. Therefore, when the first switch unit 10211 and the second switch unit 10212 are disconnected, the first switch unit 10211 is first disconnected, such that one terminal of the first energy storage module 1022 close to the first switch unit 10211 is in a suspending state, and then the second switch unit 10212 is disconnected. Thus, charges on the second switch unit 10212 will not be transferred to the first energy storage module 1022, thereby reducing the influence of the channel injection effect. The bias voltage of the first switch unit 10211 may change from a high level to a low level prior to the bias voltage of the second switch unit 10212. Therefore, the bias voltage of the first switch unit 10211 also changes from a low level to a high level prior to the bias voltage of the second switch unit 10212. Similarly, the third switch unit 10231 and the fourth switch unit 10232 are also controlled in this way to reduce the influence of the channel injection effect.

The switch control in one cycle is described above. Such periodic cycle control can maintain the voltage of the second energy storage module 1024 near the regulated voltage. The second terminal of the second energy storage module 1024 serves as the output terminal of the charge pump circuit 102, and is connected to an input terminal of the output feedback circuit 103. The output feedback circuit 103 transmits a feedback signal (VFB) to the error amplifying circuit 101 according to a voltage signal outputted from the second terminal of the second energy storage module 1024, thereby forming degeneration with respect to the error amplifying circuit 101, and playing a role in stabilizing the output voltage from the error amplifying circuit 101.

Based on the above block diagram of the low dropout regulator circuit shown in FIG. 1, FIG. 4 is a global schematic diagram of a block diagram of a circuit structure of an output feedback circuit, and an error amplifying circuit and a charge pump circuit in the low dropout regulator circuit provided in an embodiment of the present disclosure, and focuses on showing a specific structure of the output feedback circuit 103 in the low dropout regulator circuit. Alternatively, in an embodiment of the present disclosure, as shown in FIG. 4, the output feedback circuit 103 includes a sixth field effect transistor 1031, a first resistor 1032, a second resistor 1033, and a fourth capacitor 1034;

the output terminal of the charge pump circuit 102 is connected to a grid electrode of the sixth field effect transistor 1031, a drain electrode of the sixth field effect transistor 1031 is connected with an input voltage, and a source electrode of the sixth field effect transistor 1031 outputs an output voltage from the low dropout regulator circuit 10;

a first terminal of the first resistor 1032 is connected to the source electrode of the sixth field effect transistor 1031, a second terminal of the first resistor 1032 is connected to the second resistor 1033, and the second terminal of the first resistor 1032 is connected to the inverting input terminal of the amplifier 1011; and

a second terminal of the second resistor 1033 is grounded, a first terminal of the fourth capacitor 1034 is connected to the source electrode of the sixth field effect transistor 1031, and a second terminal of the fourth capacitor 1034 is grounded.

Based on the output feedback circuit shown in FIG. 4, there is a voltage difference between the grid electrode and the source electrode of the sixth field effect transistor 1031, and the grid voltage is limited by the power supply voltage. If no charge pump circuit 102 is provided, the voltage outputted from the error amplifier circuit 101 is inputted to the grid electrode of the sixth field effect transistor, and the drain electrode of the sixth field effect transistor 1031 is connected with the power supply voltage, such that the grid voltage of the sixth field effect transistor 1031 is too small to switch on the sixth field effect transistor 1031. After the charge pump circuit 102 is additionally provided, the voltage outputted from the error amplifying circuit 101 is boosted by the charge pump circuit 102 and then outputted to the grid electrode of the sixth field effect transistor 1031, such that the sixth field effect transistor 1031 is switched on.

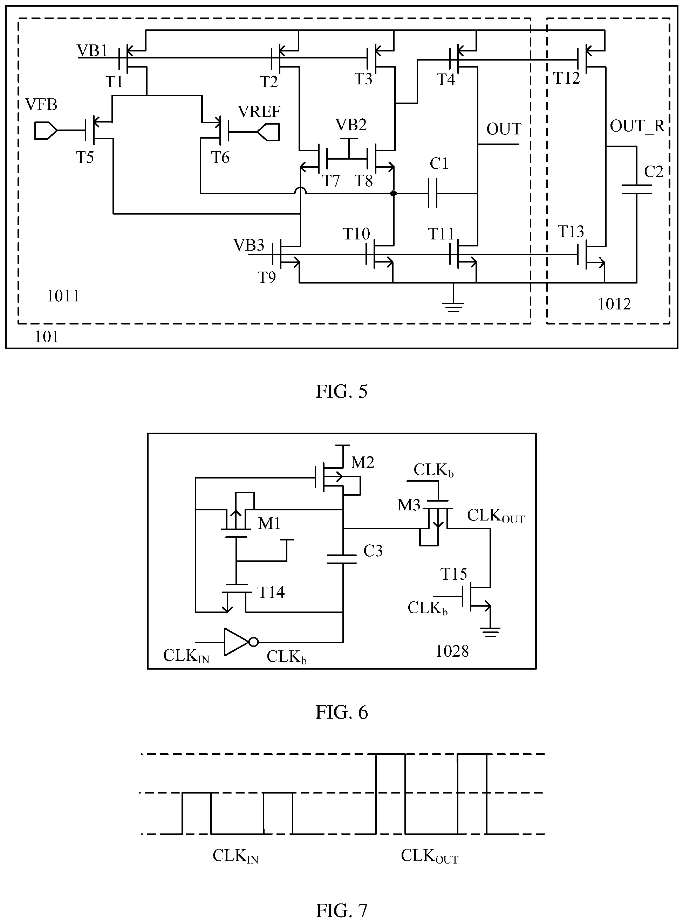

Based on the above block diagram of the low dropout regulator circuit as shown in FIG. 1, FIG. 5 is a schematic structural diagram of the error amplifying circuit provided in an embodiment of the present disclosure, and shows an internal structure of the error amplifying circuit 101 in the low dropout regulator circuit. As shown in FIG. 5, the error amplifying circuit 101 includes the amplifier 1011 and the voltage replication module 1012, and a signal voltage outputted from the amplifier 1011 is the same as a signal voltage outputted from the voltage replication module 1012. OUT represents the output terminal of the amplifier 1011, and OUT_R represents the output terminal of the voltage replication module 1012.

In FIG. 5, the letter T is used to denote a field effect transistor. In the circuit shown in FIG. 5, the field effect transistor T may also be a MOS, which is not limited in the present disclosure, and C is used to denote a capacitor. The amplifier 1011 includes 11 field effect transistors T1 to T11, and 1 capacitor C1.

The voltage replication module 1012 includes 2 field effect transistors T12 and T13, and 1 capacitor C2.

In the amplifier 1011, source electrodes of T1 to T4 are connected with the power supply voltage, grid electrodes of T1 to T3 are connected to bias voltage VB1, a grid electrode of T4 is connected to a drain electrode of T3, a drain electrode of T1 is connected to source electrodes of T5 and T6 respectively, a grid electrode of T5 serves as the inverting input terminal of the amplifier 1011, the grid electrode of T5 may input a VFB signal (i.e., a feedback signal outputted from the output feedback circuit 103), a grid electrode of T6 serves as the non-inverting input terminal of the amplifier 1011, and the grid electrode of T6 may input a VREF signal (i.e., an externally inputted reference voltage).

A drain electrode of T7 is connected to a drain electrode of T2, and a drain electrode of T8 is connected to the drain electrode of T3. A grid electrode of T7 is connected to a grid electrode of T8, and is connected with bias voltage VB2. A drain electrode of T5 is connected to a source electrode of T7, a drain electrode of T6 is connected to a source electrode of T8, and the drain electrode of T8 and a drain electrode of T4 are connected to either terminal of C1 respectively.

A drain electrode of T9 is connected to the source electrode of T7, a drain electrode of T10 is connected to the source electrode of T8, a drain electrode of T11 is connected to the drain electrode of T4, source electrodes of T9 to T11 are grounded, and grid electrodes of T9 to T11 are connected to bias voltage VB3, where the drain electrode of T4 is the output terminal of the amplifier 1011.

In the voltage replication module 1012, a source electrode of T12 is connected to the power supply voltage, a grid electrode of T12 is connected to the bias voltage VB1, a drain electrode of T12 is connected to a drain electrode of T13, a source electrode of T13 is grounded, a grid electrode of T13 is connected to the drain electrode of T3, and the drain electrode of T12 and the source electrode of T13 are connected to either terminal of C2 respectively, where the drain electrode of T12 is the output terminal of the voltage replication module 1012.

It should be noted that the bias voltages VB1, VB2, and VB3 shown in FIG. 5 are inputted from an external circuit. Of course, FIG. 5 only provides example description of implementations of the amplifier 1011 and the voltage replication module 1012, which does not represent that the present disclosure is limited to this.

Based on the above structural diagram of the low dropout regulator circuit as shown in FIG. 2, FIG. 6 is a structural diagram of a voltage boost circuit provided in an embodiment of the present disclosure, and shows an internal structure of the voltage boost circuit. Referring to the circuit as shown in FIG. 2, an input terminal of the voltage boost circuit 1028 is connected to an output terminal of the clock control circuit 1027, and an output terminal of the voltage boost circuit 1028 is connected to the grid electrode of the fourth field effect transistor. In FIG. 6, the letter T is used to denote a field effect transistor, M is used to denote a MOS, and C is used to denote a capacitor.

Specifically and alternatively, the voltage boost circuit 1028 may include two field effect transistors T14 and T15, 3 MOS (M1, M2, and M3), 1 capacitor C3, and 1 inverter. An input terminal of the inverter is connected to the output terminal of the clock control circuit 1027, the input terminal of the inverter inputs a clock input signal CLK_{IN}, an output terminal of the inverter outputs an inverting clock signal CLK_{b}, and the output terminal of the inverter is connected to a drain electrode of T14. A grid electrode of T14 is connected to a grid electrode of M1, and is connected with the power supply voltage. A source electrode of T14 is connected to a drain electrode of M1.

A source electrode of M2 is connected to a source electrode of M1, a grid electrode of M2 is connected to the grid electrode of T14, a drain electrode of M2 is connected to the power supply voltage, and the source electrode of M2 and the drain electrode of T14 are connected to either terminal of C3 respectively.

The source electrode of M2 is connected to a source electrode of M3, a grid electrode of M3 may be connected to the output terminal of the inverter, the grid electrode of M3 is connected with the inverting clock signal CLK_{b}, a drain electrode of M3 is connected to a drain electrode of T15, a grid electrode of T15 may be connected to the output terminal of the inverter, the grid electrode of T15 is connected with the inverting clock signal CLK_{b}, and a source electrode of T15 is grounded, where the drain electrode of M3 is the output terminal of the voltage boost circuit 1028, outputs a clock output signal CLK_{OUT}, and controls the fourth field effect transistor based on the clock output signal CLK_{OUT}.

Referring to the circuit structure shown in FIG. 2, the charge pump circuit 102 boosts the output voltage, i.e., boosts the input voltage of the output feedback circuit 103. In this case, the bias voltage of the fourth switch unit 10232 (which may be the fourth field effect transistor) should also be boosted accordingly. Otherwise, the fourth switch unit 10232 cannot be switched on. Therefore, the voltage of the clock bias voltage CLK_{IN} is boosted by the voltage boost circuit 1028 to output the clock bias voltage CLK_{OUT}. As shown in FIG. 7, FIG. 7 is a schematic diagram of a signal effect of the voltage boost circuit provided in an embodiment of the present disclosure.

In the low dropout regulator circuit of embodiments of the present disclosure, a charge pump circuit provides a higher voltage, i.e., an input voltage of an output feedback circuit is boosted, such that a grid electrode of an N-type MOS can input a higher voltage even in a low-voltage environment, and the N-type MOS applies to a low-voltage environment; a clock control circuit included in the charge pump circuit can control disconnection or closure of a first switch module, a third switch module, and a second switch module respectively, charge a first energy storage module when a switch unit in the first switch module is closed, and charge a parasitic capacitor when a switch in the third switch module is closed; the first energy storage module charges a second energy storage module when a switch unit in the second switch module is closed, to ensure voltage stability; and before the second switch module is closed, the third switch module can be closed to separately charge the parasitic capacitor, thereby avoiding great voltage fluctuations caused by charging of the parasitic capacitor when the second switch module is closed.

The above product can execute the method provided in embodiments of the present disclosure, and has corresponding function modules for executing the method and beneficial effects. The method provided in the embodiments of the present disclosure may be referred to for the technical details that are not described in detail in this embodiment.

In the 1990s, an improvement of a technology can be clearly distinguished between a hardware improvement (e.g., an improvement on a circuit structure of a diode, a transistor, a switch, or the like) or a software improvement (e.g., an improvement on a process). However, with the development of the technology, at present, improvements of many processes can be regarded as direct improvements of a hardware circuit structure. Almost all designers obtain a corresponding hardware circuit structure by programming the improved process into a hardware circuit. Therefore, it cannot be said that an improvement of a process cannot be implemented with hardware entity modules. For example, a programmable logic device (PLD) (e.g., a Field Programmable Gate Array (FPGA)) is such an integrated circuit that its logical functions are determined by a user through programming a device. A designer "integrates" a digital system onto a PLD by programming by himself without requiring a chip manufacturer to design and manufacture a dedicated integrated circuit chip. Further, at present, instead of manually making integrated circuit chips, this kind of programming is mostly implemented by using "logic compiler" software, which is similar to a software compiler used in program development and compilation. The previous original code must also be compiled in a specific programming language, which is referred to as Hardware Description Language (HDL), and there is not only one kind, but many kinds of HDL, e.g., ABEL (Advanced Boolean Expression Language), AHDL (Altera Hardware Description Language), Confluence, CUPL (Cornell University Programming Language), HDCal, JHDL (Java Hardware Description Language), Lava, Lola, MyHDL, and PALASM, RHDL (Ruby Hardware Description Language). At present, VHDL (Very-High-Speed Integrated Circuit Hardware Description Language) and Verilog are most commonly used. Those skilled in the art should further clearly know that it will be very easy to obtain a hardware circuit that implements the logical process only by slightly logically programming the process with the above hardware description languages and programming the process into an integrated circuit.

The controller may be implemented in any suitable manner. For example, the controller may take the form of a microprocessor or a processor and a computer-readable medium storing computer-readable program code (such as software or firmware) executable by the (micro)processor, a logic gate, a switch, an application specific integrated circuit (ASIC), a programmable logic controller, and an embedded microcontroller. Examples of the controller include, but are not limited to, the following microcontrollers: ARC 625D, Atmel AT91SAM, Microchip PIC18F26K20, and Silicone Labs C8051F320. A memory controller may also be implemented as a part of the memory control logic. Those skilled in the art also know that in addition to implementing the controller in a manner of purely computer-readable program code, it is completely possible to logically programme the process steps such that the controller implements a same function in the form of a logic gate, a switch, an application specific integrated circuit, a programmable logic controller, an embedded microcontroller, or the like. Therefore, such a controller may be regarded as a hardware component, and an apparatus included therein and configured to implement various functions may also be regarded as a structure within the hardware component. Or even, it may be regarded that the apparatus configured to implement various functions may be a software module for implementing the method, or may be the structure within the hardware component.

It should be further noted that the terms such as "comprising", "including" or any other variation thereof are intended to cover non-exclusive inclusions, such that a process, a method, an article, or a device that includes a series of elements not only includes those elements, but also includes other elements that are not explicitly listed, or further includes elements that are inherent to such a process, method, article, or device. An element defined by the wording "comprises a ..." does not, without more constraints, preclude the existence of other identical elements in the process, the method, the article, or the device that includes the element.

The embodiments in the present specification are described progressively, identical or similar portions between the embodiments may be mutually referred to, and differences of each embodiment from other embodiments are mainly described in the embodiment. In particular, embodiments of the system are substantially similar to embodiments of the method, and therefore are relatively simply described. A part of description of the embodiments of the method may be referred to for relevant parts.

The above description merely provides embodiments of the present disclosure, and is not intended to limit the present disclosure. For those skilled in the art, the present disclosure may have various modifications and alterations. Any modification, equivalent replacement, improvement, and the like made within the spirit and principles of the present disclosure should be included within the scope of the appended claims of the present disclosure.

## Claims

1. A low dropout regulator circuit, comprising: an error amplifying circuit, a charge pump circuit, and an output feedback circuit; wherein
an output terminal of the error amplifying circuit is connected to an input terminal of the charge pump circuit;
the charge pump circuit comprises a first switch module, a first energy storage module, a third switch module, a parasitic capacitor, a second switch module, a second energy storage module, and a clock control circuit, wherein the parasitic capacitor is formed between an element in the first energy storage module and a ground point;
the first switch module is connected to the first energy storage module to form a first charging branch; the third switch module is connected to one terminal of the first energy storage module, the first energy storage module and the parasitic capacitor form a third charging branch; and the first energy storage module is connected to the second switch module and the second energy storage module to form a second charging branch;
the clock control circuit is connected to the first switch module to control turn-on and turn-off of the first switch module, is connected to the third switch module to control turn-on and turn-off of the third switch module, and is connected to the second switch module to control turn-on and turn-off of the second switch module; and
an output terminal of the charge pump circuit is connected to the output feedback circuit, and the output feedback circuit is connected to the error amplifying circuit.

2. The low dropout regulator circuit according to claim 1, wherein the error amplifying circuit comprises an amplifier and a voltage replication module, and the voltage replication module outputs the same output voltage as the amplifier;
an inverting input terminal of the amplifier is connected to the output feedback circuit, a reference voltage is inputted to a non-inverting input terminal of the amplifier, and an output terminal of the amplifier is connected to the second charging branch; and
an output terminal of the voltage replication module is connected to the third charging branch.

3. The low dropout regulator circuit according to claim 1, wherein the first switch module comprises a first switch unit and a second switch unit; one terminal of the first switch unit is grounded, and the other terminal of the first switch unit is connected to a first terminal of the first energy storage module; and
one terminal of the second switch unit is connected to a second terminal of the first energy storage module, and the other terminal of the second switch unit is connected to a regulated voltage.

4. The low dropout regulator circuit according to claim 3, wherein the first switch unit is a first field effect transistor, and the second switch unit is a second field effect transistor.

5. The low dropout regulator circuit according to claim 2, wherein the second switch module comprises a third switch unit and a fourth switch unit;
one terminal of the third switch unit is connected to the output terminal of the amplifier and a first terminal of the second energy storage module, and the other terminal of the third switch unit is connected to a first terminal of the first energy storage module; and
one terminal of the fourth switch unit is connected to a second terminal of the second energy storage module, and the other terminal of the fourth switch unit is connected to a second terminal of the first energy storage module.

6. The low dropout regulator circuit according to claim 5, wherein the third switch unit is a third field effect transistor, and the fourth switch unit is a fourth field effect transistor.

7. The low dropout regulator circuit according to claim 6, wherein the charge pump circuit further comprises a voltage boost circuit, and the voltage boost circuit is connected between the clock control circuit and a grid electrode of the fourth field effect transistor.

8. The low dropout regulator circuit according to claim 2, wherein the third switch module is connected between the output terminal of the voltage replication module and a first terminal of the parasitic capacitor, a second terminal of the parasitic capacitor is grounded, and the first terminal of the parasitic capacitor is connected to a first terminal of the first energy storage module.

9. The low dropout regulator circuit according to claim 8, wherein the third switch module is a fifth field effect transistor.

10. The low dropout regulator circuit according to any one of claims 1 to 9, wherein
the first energy storage module is a first capacitor, the second energy storage module is a second capacitor, and the parasitic capacitor is a third capacitor, wherein the third capacitor is formed between a polar plate of the first capacitor and a ground point.

11. The low dropout regulator circuit according to claim 2, wherein the output feedback circuit comprises a sixth field effect transistor, a first resistor, a second resistor, and a fourth capacitor;
the output terminal of the charge pump circuit is connected to a grid electrode of the sixth field effect transistor, a drain electrode of the sixth field effect transistor is connected with an input voltage, and a source electrode of the sixth field effect transistor outputs an output voltage from the low dropout regulator circuit;
a first terminal of the first resistor is connected to the source electrode of the sixth field effect transistor, a second terminal of the first resistor is connected to the second resistor, and the second terminal of the first resistor is connected to the inverting input terminal of the amplifier; and
a second terminal of the second resistor is grounded, a first terminal of the fourth capacitor is connected to the source electrode of the sixth field effect transistor, and a second terminal of the fourth capacitor is grounded.
